Europäisches Patentamt

European Patent Office

Office européen des brevets

(19)

(11) Veröffentlichungsnummer: **0 013 391**

**A1**

(12) **EUROPÄISCHE PATENTANMELDUNG**

(21) Anmeldenummer: 79105265.7

(22) Anmeldetag: 19.12.79

(51) Int. Cl.³: **C 08 G 18/10**
C 08 G 18/04, C 08 F 283/06
C 08 G 18/63, C 08 L 75/08
//(C08L75/08, 57/00)

(30) Priorität: 04.01.79 DE 2900184

(43) Veröffentlichungstag der Anmeldung:
23.07.80 Patentblatt 80/15

(84) Benannte Vertragsstaaten:
BE DE FR GB IT NL

(71) Anmelder: BAYER AG
Zentralbereich Patente, Marken und Lizenzen
D-5090 Leverkusen 1, Bayerwerk(DE)

(72) Erfinder: von Bonin, Wulf, Dr.
Mendelssohnstrasse 30
D-5090 Leverkusen 1(DE)

(72) Erfinder: Vehlewald, Peter, Dr.
Fasanenstrasse 20
D-5653 Leichlingen(DE)

(54) Verfahren zur Herstellung von modifizierten Polyisocyanaten, die nach diesem Verfahren erhältlichen Polyisocyanate, sowie ihre Verwendung als Aufbaukomponente bei der Herstellung von Polyurethankunststoffen.

(57) Die Erfindung betrifft ein Verfahren zur Herstellung von modifizierten, flüssigen organischen Polyisocyanaten durch radikalisch initiierte Polymerisation olefinisch ungesättigter Monomerer, wobei man als Reaktionsmedium ein Gemisch aus organischen Polyisocyanaten mit 1 bis 25 Äquivalent-% an Polyhydroxypolyäthern des Molekulargewichtsbereichs 300 bis 10 000 und/oder ein aus einem derartigen Gemisch entstandenes Gemisch aus Urethangruppen-freien organischen Polyisocyanaten und Urethangruppen aufweisenden NCO-Präpolymeren verwendet, die nach diesem Verfahren erhältlichen Polyisocyanate, sowie ihre Verwendung als Aufbaukomponente bei der Herstellung von Polyurethankunststoffen.

EP 0 013 391 A1

0013391

BAYER AKTIENGESELLSCHAFT          D 5090 Leverkusen, Bayerwerk

Zentralbereich
Patente, Marken und Lizenzen      Wr/bc

Verfahren zur Herstellung von modifizierten Polyisocyanaten, die nach diesem Verfahren erhältlichen Polyisocyanate, sowie ihre Verwendung als Aufbaukomponente
bei der Herstellung von Polyurethankunststoffen

Die Herstellung von modifizierten Polyisocyanaten durch
radikalisch initiierte Polymerisation olefinisch ungesättigter Monomerer in organischen Polyisocyanaten als
Reaktionsmedium ist bereits bekannt (vgl. z.B. DE-OS
1 720 747, DE-OS 2 242 520, DE-OS 2 256 104 oder DE-AS
2 031 408). Als Reaktionsmedium werden in diesen Vorveröffentlichungen insbesondere die üblichen niedermolekularen organischen Polyisocyanate oder aber auch deren
Modifizierungsprodukte bzw. Lösungen dieser Verbindungen
in inerten organischen Lösungsmitteln genannt. Die in
den Vorveröffentlichungen beschriebene Polymerisationsreaktion führt im allgemeinen zu Pfropfpolymerisaten bzw.
zu Telomerisaten, in denen das Polyisocyanat bzw. modifizierte Polyisocyanat die Pfropfgrundlage bzw. das Telogen

Le A 19 350

bilden. Die Mitverwendung von Lösungsmitteln bei der Herstellung der Polymerisate bzw. bei der Verwendung der Verfahrensprodukte, beispielsweise zur Herstellung von Polyurethanen, ist insbesondere bei Verwendung von modifizierten Polyisocyanaten, d.h. beispielsweise bei Verwendung von durch teilweise Biuretisierung der Isocyanatgruppen hergestellten Biuretpolyisocyanaten oder bei Verwendung von NCO-Präpolymeren als Pfropfgrundlage bzw. Telogen unumgänglich, da die Pfropfpolymerisate auf Basis solcher modifizierten Polyisocyanate eine für ihre spätere Verarbeitung zu hohe Viskosität aufweisen. Bei Verwendung von unmodifizierten, bei Raumtemperatur flüssigen organischen Polyisocyanaten als Pfropfgrundlage bzw. Telogen ist die Mitverwendung derartiger Hilfslösungsmittel zwar nicht in jedem Fall erforderlich, obwohl auch hier hohe Viskositäten auftreten können, jedoch führt die Polymerisation in nicht modifiziertem organischem Polyisocyanat als ausschließlichem Reaktionsmedium sehr oft zu inhomogenen Gemischen, da die Polymerisate oft in den überschüssigen unmodifizierten Polyisocyanaten schwer löslich sind. Außerdem weisen die Reaktionsgemische eine nur mangelhafte Verträglichkeit mit den Polyhydroxypolyäthern auf, welche vorzugsweise als Reaktionspartner für die Verfahrensprodukte bei der Herstellung von Polyurethankunststoffen eingesetzt werden. Dies führt oft zu unkontrollierbaren Ausfällungen, was insbesondere bei der Herstellung von Polyurethanschaumstoffen erhebliche Vermischungs- und Handhabungsstörungen verursacht.

Es war daher die Aufgabe der vorliegenden Erfindung, stabile, Vinylpolymerisate bzw. -pfropfpolymerisate in homo-

Le A 19 350

gener Verteilung enthaltende, bei Raumtemperatur flüssige modifizierte Polyisocyanate zur Verfügung zu stellen, die sich problemlos mit den gängigen Polyätherpolyolen vermischen lassen und die bei relativ hohem Polymerisatanteil noch gut handhabbar sind. Diese Aufgabe wurde durch das nachstehend näher beschriebene erfindungsgemäße Verfahren gelöst.

Gegenstand der vorliegenden Erfindung ist ein Verfahren zur Herstellung von modifizierten, bei Raumtemperatur flüssigen organischen Polyisocyanaten durch radikalisch initiierte Polymerisation olefinisch ungesättigter Monomerer in organischen Polyisocyanaten als Reaktionsmedium, dadurch gekennzeichnet, daß man als Reaktionsmedium ein Gemisch aus organischen Polyisocyanaten mit 1 bis 25 Äquivalent-% an Polyhydroxypolyäthern des Molekulargewichtsbereichs 300 bis 10 000 und/oder ein aus einem derartigen Gemisch durch Urethanbildung entstandenes Gemisch aus Urethangruppen-freien organischen Polyisocyanaten und Urethangruppen aufweisenden Isocyanatpräpolymeren verwendet.

Gegenstand der vorliegenden Erfindung sind auch die nach diesem Verfahren erhältlichen modifizierten Polyisocyanate.

Gegenstand der vorliegenden Erfindung ist schließlich auch die Verwendung dieser modifizierten Polyisocyanate als Aufbaukomponente bei der Herstellung von geschäumten oder ungeschäumten, harten oder elastischen Polyurethankunststoffen nach dem Isocyanat-Polyadditionsverfahren.

Le A 19 350

Bei der Durchführung des erfindungsgemäßen Verfahrens entstehen bei Raumtemperatur flüssige, stabile, homogene Gemische von Vinylpolymerisaten in organischen Polyisocyanaten bzw. von Pfropfpolymerisaten auf Basis von organischen Polyisocyanaten in unmodifizierten Polyisocyanaten. Es handelt sich bei den Verfahrensprodukten entweder um kolloide Lösungen oder vorzugsweise um bei Raumtemperatur stabile Suspensionen bzw. Emulsionen, die keine festen Anteile mit über 0,5 mm liegenden Teilchendurchmesser aufweisen. Die Verfahrensprodukte weisen eine sehr gute Verträglichkeit mit den gängigen Polyätherpolyolen der Polyurethanchemie auf.

In chemischer Hinsicht handelt es sich bei dem erfindungsgemäßen Verfahren um eine radikalische Polymerisation, worunter eine Polymerisationsreaktion zu verstehen ist, die durch Starterradikale ausgelöst wird. Zur Erzeugung dieser Starterradikale ist neben Licht und energiereicher sonstiger Strahlung, Erhitzung oder Aufbringen hoher mechanischer z.B. Scherkräfte, vor allem die Verwendung sogenannter radikalischer Initiatoren üblich. Diese Initiatoren, die allein oder im Gemisch miteinander angewendet werden können, können die Radikale durch Redox-, Umlagerungs- oder Zerfallsreaktionen zumeist bei Temperaturen über $0^{o}C$ freisetzen. Es werden vorzugsweise allein oder aber auch als Gemisch die geläufigen peroxydischen und/oder Azo-Radikalinitiatoren verwendet, z.B. Azodiisobutyronitril und dessen Abkömmlinge, z.B. Ester, Amide oder Amidine der Azodiisobuttersäure und vergleichbare Verbindungen, Hydroperoxyde, Ketoperoxyde, Peroxyester, Diacylperoxyde, Percarbonate, Persulfonate,

Le A 19 350

gegebenenfalls in Verbindung mit Reduktionsmitteln, Cyclohexanonperoxyd, Dilauroyl-, Dibenzoyl-, Di-t-butyl-, Dicumylperoxyd, Cumolhydroperoxyd, t-butylperoxyisobutyrat, t-Butylhydroperoxyd, wobei letztere auch in Kombination mit Azodiisobutyronitril besonders bevorzugt werden. Die in den vorgenannten Vorveröffentlichungen genannten Initiatoren können beim erfindungsgemäßen Verfahren selbstverständlich ebenfalls eingesetzt werden.

Bei Polymerisationstemperaturen zwischen 20 und 200$^O$C, insbesondere 70 bis 130$^O$C, werden die Radikalbildner, bezogen auf eingesetzte radikalisch polymerisierbare Monomere, gegebenenfalls unter Inertgasatmosphäre, z.B. $N_2$ in Mengen von 0,01 bis 3, vorzugsweise 0,1 bis 1,5 Gew.-%, eingesetzt.

Als radikalisch polymerisierbare Monomere werden allein oder im Gemisch vorzugsweise Acrylnitril und Styrol verwendet, wobei vor allem Gemische aus Acrylnitril mit bis zu 50 Gew.-% (bezogen auf Gemisch) Styrol, insbesondere 1 bis 15 % Styrol, Verwendung finden. Es kommen aber auch nahezu alle radikalisch polymerisierbaren mono- oder polyfunktionellen Monomeren, ob sie nun gegenüber Isocyanaten inert sind oder mit diesen Reaktionen eingehen, in Betracht. Solche Monomere oder Monomerkombinationen sind z.B. in den obengenannten Veröffentlichungen genannt.

Auch polyfunktionelle Monomere sind zumindest anteilweise geeignet wie z.B.

Le A 19 350

Methylenbisacrylamid, Glykolbisacrylat, Glycerin(meth)-acrylate, Diäthyl(glykol)carbonat, Divinylbenzol, Fumar- und Maleinsäurepolyester, (Di)Äthylithaconat oder -Maleat bzw. -Fumarat.

Erfindungswesentlich ist nun die Verwendung ganz bestimmter Polyisocyanatgemische als Reaktionsmedium. Es handelt sich hierbei um bei Raumtemperatur flüssige Gemische aus einfachen organischen Polyisocyanaten und den üblichen Polyhydroxypolyäthern, wobei die Komponenten in solchen Mengen zum Einsatz gelangen, daß, bezogen auf die vorliegenden NCO-Äquivalente, maximal 25, vorzugsweise 1 bis 10, Äquivalent-% an Hydroxylgruppen des Polyätherpolyols vorliegen. Zur Durchführung des erfindungsgemäßen Verfahrens ist es unerheblich, in wie weit die zwischen Isocyanatgruppen und Hydroxylgruppen ablaufende Urethanbildung bereits abgelaufen ist, d.h. es können sowohl frisch zubereitete Gemische, bei denen eine Urethanbildung praktisch noch nicht erfolgt ist, als auch teilweise oder ganz abreagierte Gemische, d.h. Gemische aus unmodifizierten Polyisocyanaten und aus Polyisocyanat und Polyätherpolyol gebildetem NCO-Präpolymer eingesetzt werden.

Als Polyäther werden vorzugsweise solche mit Molekulargewichten zwischen 300 und 10 000, insbesondere solche mit Molekulargewichten von ca. 1000 bis 7000 verwendet. Grundsätzlich ist auch der Einsatz von Hydroxylgruppenfreien Polyäthern möglich, obwohl dies keinesfalls bevorzugt ist.

Le A 19 350

Unter den verschiedenen in Betracht kommenden Polyhydroxypolyäthern haben sich als besonders geeignet solche erwiesen, die durch Anlagerung von Propylenoxid und/oder Äthylenoxid an geeignete Startermoleküle zugänglich sind,
und die zwischen 2 und 4 endständige Hydroxylgruppen
aufweisen. Besonders bevorzugt sind Polyätherpolyole mit
mindestens 5 Gew.-%, vorzugsweise 6 bis 65 Gew.-% an eingebauten Äthylenoxideinheiten. Die Herstellung der Polyätherpolyole erfolgt nach bekannten Methoden des Standes
der Technik, beispielsweise durch Alkoxylierung von
Wasser oder organischen Verbindungen mit vorzugsweise
2 bis 4 im Sinne der Alkoxylierungsreaktion aktiven
Wasserstoffatomen wie z.B. Äthylenglykol, 1,2-Propandiol, Tetramethylenglykol, Hexamethylenglykol, Trimethylolpropan, Glycerin, Pentaerythrit, Diäthanolamin,
Triäthanolamin, 2,4-Diaminotoluol oder 4,4'-Diaminodiphenylmethan. Auch die an sich bekannten modifizierten
Polyätherpolyole wie z.B. die durch Pfropfpolymerisation mit Vinylmonomeren modifizierten Polyätherpolyole oder
Polyharnstoffe bzw. Polyhydrazodicarbonamide als disperse
Phase enthaltende Polyätherpolyole des Standes der Technik
kommen in Betracht.

Geeignete Polyisocyanate sind alle beliebigen, bei Raumtemperatur vorzugsweise flüssigen organische Polyisocyanate, d.h. aliphatische Polyisocyanate wie z.B. Hexamethylendiisocyanat, cycloaliphatische Diisocyanate wie
z.B. 4,4'-Diisocyanato-dicyclohexylmethan oder 1-Iso-
cyanato-3,3,5-trimethyl-5-isocyanatomethyl-cyclohexan,
aromatische Polyisocyanate wie z.B. 2,4-Diisocyanatotoluol und/oder 2,6-Diisocyanatotoluol, 2,4'-Diiso-
cyanatodiphenylmethan, 4,4'-Diisocyanatodiphenyl-
methan und/oder höherfunktionelle Polyisocyanate der

Le A 19 350

Diphenylmethanreihe, wie sie neben den zuletzt genannten Diisocyanaten bei der Phosgenierung von Anilin/Formaldehyd-Kondensaten entstehen. Beliebige Gemische der genannten Isocyanate können ebenfalls eingesetzt werden. Vorzugsweise werden die zuletzt genannten aromatischen Polyisocyanate verwendet. Auch modifizierte Polyisocyanate, beispielsweise solche, die durch partielle Urethanbildung, Carbodiimidbildung, Uretdionbildung, Allophanatbildung, Trimerisation oder Biuretbildung modifiziert worden sind, kommen, falls es sich um bei Raumtemperatur flüssige Produkte handelt, in Betracht, obwohl es sich bei diesen modifizierten Polyisocyanaten nicht um bevorzugte Ausgangsmaterialien handelt.

Bei der Durchführung des erfindungsgemäßen Verfahrens werden die olefinisch ungesättigten Monomeren in Mengen von 5 bis 50, vorzugsweise 10 bis 30 Gew.-%, bezogen auf Gesamtreaktionsgemisch, eingesetzt. Nicht abreagierte Restmengen können nach Beendigung des erfindungsgemäßen Verfahrens destillativ entfernt werden.

Die Durchführung des erfindungsgemäßen Verfahrens erfolgt im Temperaturbereich zwischen 20 und 200°C, vorzugsweise 70 bis 130°C, beispielsweise dergestalt, daß man das Reaktionsgemisch bei Raumtemperatur herstellt, den Initiator hinzufügt und dann durch Erhitzen und gegebenenfalls (zusätzlich) durch UV-Bestrahlung die Polymerisationsreaktion in Gang bringt, oder aber vorzugsweise dergestalt, daß man das Polyisocyanat im Gemisch mit dem Polyäther

Le A 19 350

bzw. ein vorher hergestelltes Gemisch aus Polyisocyanat und NCO-Präpolymer auf die gewünschte Reaktionstemperatur bringt und dann die radikalisch polymerisierbaren Monomeren nebst Radikalbildner hinzufügt und zur Reaktion bringt. Es ist auch möglich, zunächst das Polyisocyanat allein auf die Reaktionstemperatur zu bringen und das Polyätherpolyol zusammen mit den Monomeren und dem Radikalbildner hinzuzufügen. Es ist auch möglich, das Polyisocyanat, den Polyäther und die olefinisch ungesättigten Monomeren vorzuvermischen, auf die gewünschte Reaktionstemperatur zu bringen und dann erst den Radikalbildner gegebenenfalls auch im Gemisch mit einer oder mehreren der Reaktionskomponenten, hinzuzusetzen. Bei allen Ausführungsformen kann selbstverständlich die Radikalbildung durch zusätzliche UV-Bestrahlung gefördert werden. Die Mitverwendung von Lösungsmitteln, sowie die Anwesenheit von Füllstoffen oder gelösten Polymeren ist prinzipiell möglich, erübrigt sich jedoch in den meisten Fällen.

Die als kolloide Lösungen, Emulsionen oder Suspensionen anfallenden Verfahrensprodukte sind im allgemeinen bei Raumtemperatur flüssig und mit den üblichen Polyätherpolyolen der Polyurethanchemie, beispielsweise den oben bereits genannten ohne Schwierigkeiten mischbar. Die Verfahrensprodukte können, falls erwünscht, mit weiteren Polyisocyanaten verdünnt werden, sie können mit Füllstoffen und Hilfsmitteln versetzt oder durch anschließende Modifizierungsverfahren, beispielsweise der oben bereits ange-

Le A 19 350

deuteten Art, weiter modifiziert werden. Auch der Zusatz von anorganischen oder organischen Füllstoffen, Tensiden, Lösungsmitteln, Katalysatoren, Pigmenten oder Treibmitteln ist ohne jegliche Schwierigkeit möglich. Die Verfahrensprodukte stellen wertvolle Ausgangsmaterialien zur Herstellung von geschäumten, ungeschäumten, harten, weichen oder elastischen Polyurethankunststoffen dar.

Die im folgenden aufgeführten Beispiele sollen das erfindungsgemäße Verfahren erläutern und den technisch vorteilhaften, unerwarteten Effekt des Polyätherzusatzes verdeutlichen, der dazu führt, daß im Gegensatz zur Verfahrensweise ohne Polyätherzusatz, erfindungsgemäß homogenwirkende, fließfähige, mit Polyolen gut verträgliche gut handhabbare Produkte erhältlich sind.

Die angegebenen Teile und Prozente beziehen sich auf das Gewicht, falls nichts anderes vermerkt ist.

Le A 19 350

Beispiel 1

Man stellt bei 20°C eine Lösung her aus

a) 640 Teilen 2,4-Toluylendiisocyanat, 160 Teilen 2,6-Toluylendiisocyanat, 0,75 Teilen Azodiisobutyronitril, 0,75 Teilen t-Butylperoctoat, 20 Teilen Styrol, 180 Teilen Acrylnitril. Diese Lösung wird in einem Rührtopf unter $N_2$-Atmosphäre auf 120°C unter gutem Rühren erhitzt und 1,5 Stunden bei 120°C belassen.

b) In einem zweiten gleichartigen Rührtopf wird der gleiche Versuch durchgeführt mit dem Unterschied, daß nunmehr noch ein Polyätherpolyol (Starter Trimethylolpropan, aufkondensiert 83 % Propylenoxyd und anschließend 17 % Äthylenoxyd, OH-Zahl 28) in einer Menge von 50 Teilen der Reaktionsmischung zugefügt wird.

Nach dem Abkühlen ergibt sich folgendes Bild:

1a) stellt eine breiige verklumpte inhomogene Masse dar, während 1b) eine schwach bläulich opalescierende stabile Suspension mit ausgezeichneter Fließfähigkeit und homogenen Charakter darstellt, Sie läßt sich mit weiterem Polyäther in jedem Verhältnis mischen, ohne daß eine Verklumpung zu beobachten ist, es wird vielmehr dabei eine feinteilige Suspension gebildet.

Beispiel 2

In das gemäß Beispiel 1a) bzw. 1b) erhaltene Verfahrensprodukt läßt man bei 120°C während 3 Minuten weiteres

Le A 19 350

Reaktionsgemisch in gleicher Menge einlaufen und rührt noch 40 Minuten nach. Nach dem Abkühlen ergibt sich hinsichtlich der Konsistenz und sonstiger Eigenschaften das gleiche Bild wie schon bei 1a) und 1b) beschrieben wurde.

Beispiel 3

Es wird gearbeitet wie unter Beispiel 1a) und b), nur wird die dort mitverwendete Menge Styrol gegen Acrylnitril ausgetauscht, d.h. styrolfrei gefahren. Nach dem Abkühlen hat das Reaktionsprodukt a) eine nahezu feste bis breiige inhomogene Konsistenz, während Reaktionsprodukt b) eine homogene stabile und feinteilige weißliche Suspension mit guter Fließfähigkeit darstellt, in der sich mit dem unbewaffneten Auge keine diskreten Teilchen erkennen lassen.

Beispiel 4

Ein Gemisch aus 414 Teilen 2,4-Toluylendiisocyanat, 225 Teilen 2,6-Toluylendiisocyanat, 161 Teilen technischem 4,4'-Diphenylmethandiisocyanat und 100 Teilen eines Polyätherpolyols (Starter Glyzerin, 90 % Propylenoxyd und 10 % Äthylenoxyd, OH-Zahl 45) wird auf 120°C gebracht. Dann gibt man eine Lösung von 0,5 Teilen Azodiisobutyronitril, 0,5 Teilen t-Butylperoctoat, 0,5 Teilen t-Butylhyroperoxyd, 20 Teilen Styrol in 180 Teilen Acrylnitril hinzu und läßt im Laufe von 1,5 Stunden bei 120°C am Rückfluß unter $N_2$ bei gutem Rühren ausreagieren. Nach dem Abkühlen erhält man eine getrübte leicht fluoreszierende Polymersuspension, die keine

Le A 19 350

Teilchen oder Inhomogenitäten erkennen läßt und sehr gut fließfähig ist. Sie ist mit den beiden vorgenannten Polyätherpolyolen ohne Verklumpung in jedem Verhältnis mischbar.

Führt man die vorbeschriebene Polymerisation ohne Mitverwendung des Polyäthers aus, erhält man ein breiiges inhomogen wirkendes Material ohne ausreichende Fließfähigkeit, welches Feststoffklumpen enthält.

Beispiel 5

In 8 Parallelversuchen a) bis h) wird ein technisches Gemisch aus 520 Teilen 2,4-Toluylendiisocyanat und 280 Teilen 2,6-Toluylendiisocyanat jeweils mit 60 Teilen eines der im folgenden beschriebenen Polyäther versetzt und unter Stickstoff auf ca. 120°C erhitzt.

Dann gibt man jeweils eine Lösung von 0,5 Teilen Azodiisobutyronitril, 0,5 Teilen t-Butylperoctoat und 0,5 Teilen t-Butylhydroperoxyd in einem Gemisch aus 20 Teilen Styrol und 180 Teilen Acrylnitril hinzu und läßt 1,5 Stunden auspolymerisieren.

Man erhält jeweils nach dem Abkühlen ein dünnflüssiges, schwach trübes, homogen wirkendes Reaktionsgemisch mit einem gaschromatographisch bestimmten Restmonomeren-Anteil um 1 %, der beim Durchlauf durch einen Dünnschichtverdampfer beseitigt wird.

Le A 19 350

Beim Arbeiten ohne den Polyätherzusatz erhält man jeweils ein grobteiliges inhomogenes und klumpig wirkendes breiiges Reaktionsprodukt.

Es werden folgende auf verschiedenen Startern gestartete Propylenoxydäthylenoxyd-Mischpolyole verwendet:

| Typ | Starter | % eingebautes Äthylenoxyd | OH-Zahl |
|---|---|---|---|
| a) | Trimethylolpropan | 9 | 37 |
| b) | Glyzerin | 10 | 38 |
| c) | Glyzerin | 13 | 28 |
| d) | Trimethylolpropan | 20 | 38 |
| e) | Trimethylolpropan | 10 | 46 |
| f) | Triäthanolamin | 30 | 32 |
| g) | Propylenglykol | 60 | 28 |
| h) | Propylenglykol | 60 | 65 |

## Beispiel 6

Ein Gemisch aus 640 Teilen 2,4- und 160 Teilen 2,6-Toluylendiisocyanat wird unter $N_2$ auf $100^\circ$C gebracht. Dann gibt man in den Reaktionsautoklaven noch eine Lösung von 0,75 Teilen Azodiisobutyronitril, 0,75 Teilen t-Butylperoctoat, 50 Teilen des in Beispiel 1b) verwendeten Polyäthers und 20 Teilen Styrol in 180 Teilen Acrylnitril. Man läßt 30 Minuten bei $100^\circ$C und dann 30 Minuten bei $120^\circ$C ausreagieren. Man erhält eine homogen wirkende opaleszierende Suspension als Reaktionsprodukt.

Le A 19 350

Unter Verwendung dieses Reaktionsproduktes können nach bekannten Methoden Polyurethane hergestellt werden. Im Folgenden ist beispielhaft eine Rezeptur aufgeführt, die zu einem Weichschaumstoff mit einem Raumgewicht um 40 kg/m$^3$ führt; die Einzelkomponenten sind zusammenfassend tabellarisch aufgeschlüsselt. Als Polyisocyanat wird eine Abmischung aus 100 Teilen des hier beschriebenen Reaktionsprodukts mit 40 Teilen eines durch Phosgenierung von Anilin/Formaldehyd-Kondensat gewonnenen Polyisocyanats der Viskosität 200 mPa.s/20$^{\circ}$C verwendet.

Le A 19 350

| | | |
|---|---|---|
| Polyäther auf Basis von Trimethylol-propan, Propylenoxid und Äthylenoxid der OH-Zahl 28 | 100 | Gew.-Teile |
| Wasser | 2,9 | Gew.-Teile |
| handelsüblicher tert. Aminkatalysator | 1,8 | Gew.-Teile |
| handelsüblicher Polysiloxan-Stabilisator | 1,1 | Gew.-Teile |
| Polyisocyanat | 43,3 | Gew.-Teile |
| Kennzahl (Anzahl an Isocyanatgruppen pro 100 gegenüber Isocyanatgruppen reaktionsfähigen Gruppen im Reaktions-gemisch) | 100 | |

Le A 19 350

0013391

## Patentansprüche

1) Verfahren zur Herstellung von modifizierten, bei Raumtemperatur flüssigen organischen Polyisocyanaten durch radikalisch initiierte Polymerisation olefinisch ungesättigter Monomerer in organischen Polyisocyanaten als Reaktionsmedium, dadurch gekennzeichnet, daß man als Reaktionsmedium ein Gemisch aus organischen Polyisocyanaten mit 1 bis 25 Äquivalent-% an Polyhydroxypolyäthern des Molekulargewichtsbereichs 300 bis 10 000 und/oder ein aus einem derartigen Gemisch durch Urethanbildung entstandenes Gemisch aus Urethangruppenfreien organischen Polyisocyanaten und Urethangruppen aufweisenden Isocyanatpräpolymeren verwendet.

2) Verfahren gemäß Anspruch 1, dadurch gekennzeichnet, daß man als organische Polyisocyanate aromatische Polyisocyanate, ausgewählt aus der Gruppe bestehend aus 2,4-Diisocyanatotoluol, 2,6-Diisocyanatotoluol, 2,4-Diisocyanato-diphenylmethan, 4,4'-Diisocyanat-diphenylmethan, tri- und höherfunktionellen Polyisocyanaten der Diphenylmethanreihe und Gemischen derartiger Polyisocyanate, verwendet.

3) Verfahren gemäß Anspruch 1 und 2, dadurch gekennzeichnet, daß man als olefinisch ungesättigte Monomere Gemische aus Acrylnitril und Styrol verwendet.

4) Gemäß Anspruch 1 bis 3 erhältliche modifizierte Polyisocyanate.

Le A 19 350

- 18 -

5) Verwendung der nach Anspruch 1 bis 3 erhältlichen
modifizierten Polyisocyanate als Aufbaukomponente
bei der Herstellung von geschäumten oder ungeschäumten,
harten oder elastischen Polyurethankunststoffen nach
dem Isocyanat-Polyadditionsverfahren.

<u>Le A 19 350</u>

**Europäisches Patentamt**

## EUROPÄISCHER RECHERCHENBERICHT

EP 79 10 5265

| EINSCHLÄGIGE DOKUMENTE | | | KLASSIFIKATION DER ANMELDUNG (Int.Cl. ¹) |
|---|---|---|---|
| Kategorie | Kennzeichnung des Dokuments mit Angabe, soweit erforderlich, der maßgeblichen Teile | betrifft Anspruch | |
| X | DE - A - 2 609 355 (TEXACO DEVELOP-MENT) <br> * Seiten 1-4; Ansprüche 1-3,9-11, 13,14; Seite 6, letzter Absatz; Seite 9, Absatz 4; Seite 11, Absatz 3; Seite 12, Absatz 2; Seite 14, Absatz 2; Seiten 17-19; Beispiele 1-3 * <br> -- | 1-5 | C 08 G  18/10 <br> 18/04 <br> C 08 F 283/06 <br> C 08 G  18/63 <br> C 08 L  75/08// <br> C 08 L  75/08 <br> 57/00) |
| | FR - A - 2 234 340 (I.C.I.) <br> * Seite 19, Ansprüche 1-9; Seite 1, Zeile 13 - Seite 2, Zeile 10; Seite 2, Zeilen 14-29; Seite 3, Zeilen 3-20 * <br> -- | 1-5 | **RECHERCHIERTE SACHGEBIETE (Int. Cl. ¹)** <br><br> C 08 G  18/10 <br> 18/04 <br> 18/63 <br> 18/86 |
| | FR - A - 1 593 137 (BAYER) <br> * Seite 23, Zusammenfassung, Punkte I1 und II; Seite 3, Zeilen 23-38; Seite 4, Zeilen 26-38; Seite 5, Zeile 11 - Seite 6, Zeile 13; Seite 7, Zeilen 25-35; Seite 8, Zeilen 22-34; Seite 9, Zeilen 11-24 * | 1-5 | C 08 L  75/08 <br> 75/04 <br> C 08 F 283/06 <br> 283/00 |
| D | & DE - A - 1 720 747 <br> -- | | |
| | US - A - 3 422 165 (T.K. BROTHER-TON et al.) <br> * Spalten 13,14; Ansprüche 1-4; Spalte 1, Zeilen 26-72; Spalte 2, Zeilen 10-23; Spalte 3, Zeilen 29-68; Spalte 4, Zeilen 3-12 * <br> ---- | | **KATEGORIE DER GENANNTEN DOKUMENTE** <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt

| Recherchenort | Abschlußdatum der Recherche | Prüfer |
|---|---|---|
| Den Haag | 08-04-1980 | V. PUYMBROECK |

EPA form 1503.1  06.78